# FASCICULE DE BREVET EUROPEEN

(11) **EP 0 812 892 B1**
(45) Date de publication et mention de la délivrance du brevet: **08.08.2001**
(21) Numéro de dépôt: 97401156.1
(22) Date de dépôt: 27.05.1997
(51) Int. Cl.: C09J 123/02

(54) **Colles thermofusibles à base de copolymères éthylène/(méth)acrylate d'alkyle et de polyalphaoléfine et leurs utilisations**
Schmelzklebstoffe auf Basis von Ethylenalkylmethylacrylat und Poly-alpha-Olefinen und ihre Verwendung
Hot-melt adhesives based on ethylene alkyl methacrylate and poly-alpha-olefines and their use

(30) Priorité: 11.06.1996 FR 9607235
(43) Date de publication de la demande: 17.12.1997
(73) Titulaire: Ato Findley S.A., 92800 Puteaux (FR)
(72) Inventeur: Schellenbeck, Peter, 55127 Mainz (DE); Krieger, Markus, 63505 Langensebold (DE); Reuss, Wolfgang, 60326 Frankfurt (DE); Dreyfus, Thierry, 95490 Vaureal (FR)
(74) Mandataire: Neel, Henry

(56) Documents cités:
- DE-A- 19 521 396
- US-A- 4 140 733
- US-A- 4 146 521
- US-A- 4 460 728

## Description

La présente invention a pour objet l'utilisation de colles thermofusibles à base de copolymère éthylène/(méth)acrylate d'alkyle et de polyalphaoléfine dans l'industrie du bois, de la reliure et de l'emballage.

Le collage industriel, notamment dans le domaine du bois, de la reliure et de l'emballage, est réalisé au moyen de machines fonctionnant à une cadence élevée, le temps de prise du collage étant généralement inférieur à quelques secondes.

Pour atteindre cette cadence, il est connu d'utiliser des colles thermofusibles qui ont la propriété de coller des matériaux variés par simple refroidissement. Ces colles sont constituées principalement d'un polymère qui confère à la colle ses propriétés mécaniques, d'une résine tackifiante à fort pouvoir collant à chaud et, le cas échéant, d'un agent modificateur de la rhéologie tel qu'une huile, une cire ou un plastifiant.

Les colles thermofusibles de l'art antérieur sont généralement à base d'un polymère choisi parmi les copolymères de l'éthylène et de l'acétate de vinyle (EVA), les polyamides, les polyalphaoléfines essentiellement amorphes (en anglais "amorphous polyalphaolefins" ou APAO) et les mélanges d'APAO et d'un copolymère de l'éthylène et de l'acétate de vinyle ou de (méth)acrylate d'alkyle (voir FR-A-2 721 039 et AU-B-63181/90).

Les colles qui viennent d'être citées présentent cependant des inconvénients lors du collage dans les conditions précitées.

Ainsi, les colles à base d'EVA ont une tenue à la température limitée. Par exemple, dans le domaine du bois, la tenue est de l'ordre de 80 à 110°C selon la nature du chant utilisé.

Les colles contenant un polyamide ne sont stables qu'à une température inférieure à 200°C et sont susceptibles d'être dégradées par oxydation. En outre, elles ont un coût élevé.

Les colles comprenant une APAO ont une montée en cohésion lente ce qui impose d'allonger la durée de maintien sous pression des pièces et donc de réduire la cadence. En outre, le collage comprend souvent, en aval de la machine, une étape de découpe en ligne des articles par le biais de massicots et/ou de scles dont les lames sont rapidement encrassées par la colle incomplètement durcie. Par ailleurs, ces colles forment des fils sur les dispositifs d'enduction par exemple par cylindre ou buse intermittente, ce qui provoque un encrassement de la machine, d'une part, et des souillures sur les articles collés, d'autre part.

Il a maintenant été trouvé que des colles comprenant (A) au moins une polyalphaoléfine et (B) au moins un copolymère éthylène/(méth)acrylate d'alkyle dans un rapport pondérai (B)/(A)+(B) compris entre 0,05 et 0,55 sont compatibles avec une cadence élevée (temps de prise court, absence de fils) tout en conservant la résistance élevée à la température des colles à base d'APAO.

La présente invention a donc pour objet l'utilisation de colles thermofusibles destinées à être utilisées dans des machines fonctionnant à cadence élevée dans l'industrie du bois, de la reliure et de l'emballage, ces colles étant caractérisées en ce qu'elles comprennent :
a) 30 à 90 % en poids, de préférence 70 à 90 %, (A) d'au moins une polyalphaoléfine essentiellement amorphe et (B) d'au moins un copolymère éthylène/(méth)acrylate d'alkyle, le rapport pondéral (B)/(A)+(B) étant compris entre 0,05 et 0,55 ;
b) 10 à 70 % en poids d'une résine tackifiante ;
c) 0,1 à 3 parties en poids d'un antioxydant pour 100 parties en poids des composés sous a) et b).

La polyalphaoléfine (A) est généralement choisie parmi les polymères résultant de la copolymérisation en solution de monomères choisis parmi l'éthylène, le propène, le butène-1 et l'hexène en présence d'un catalyseur du type Ziegler-Natta et les mélanges de ces copolymères. A titre d'exemple, on peut citer le VESTOPLAST® commercialisé par la Société Hüls et l'EASTOFLEX® commercialisé par la Société Eastman Chemical. De manière avantageuse, on utilise les copolymères présentant un point de fusion Bille et Anneau (norme DIN 52011) compris entre 85 et 155°C, une température de transition vitreuse mesurée par DSC (norme DIN 53765) comprise entre -10 et -35°C et une viscosité Brookfield à 190°C (norme DIN 53019) comprise entre 300 et 250000 mPa.s.

Le copolymère (B) est généralement choisi parmi les copolymères de l'éthylène et du (méth)acrylate d'alkyle dans lequel le radical alkyle linéaire ou ramifié renferme 1 à 8 atomes de carbone, et les mélanges de ces copolymères. A titre d'exemple, on peut citer le (méth)acrylate de méthyle, de butyle ou d'octyle. De préférence, on utilise des copolymères ayant une teneur en ester (méth)acrylique compris entre 5 et 35 %, un indice de fluidité (norme ASTM D 1238) compris entre 1,5 et 500 et un point de fusion Bille et Anneau (norme DIN 52011) compris entre 78 et 150°C.

On peut également choisir le copolymère (B) parmi les terpolymères éthylène/acrylate d'alkyle/anhydride maléïque dont la teneur en anhydride maléïque est compris entre 10 et 30 mg KOH/g.

La résine tackifiante est généralement choisie parmi les résines hydrocarbonées d'origine pétrolière telles que les résines aliphatiques, par exemple à teneur élevée en C₅, ou les résines aromatiques, par exemple à teneur élevée en C₉, modifiées ou hydrogénées (par exemple ESCOREZ® 2100, 2500, 5300 ou 2100 commercialisé par Exxon, HERCURES® AR 100 commercialisé par Hercules ou WINTACK® 95 commercialisé par Goodyear), les résines terpéniques synthétiques ou modifiées (par exemple ARKON® P 100 commercialisé par Arakawa ou ZONATAC® 501 LITE commercialisé par Arizona) et les résines dérivées de la colophane notamment les esters du glycérol (par exemple STAYBILITE® ESTER 10, FORAL® 85 commercialisés par Herculès) ou du pentaérythritol (par exemple PENTALYN® H commercialisé par Herculès).

L'antioxydant est généralement choisi parmi les phénols bloqués (par exemple IRGANOX® 1010 commercialisé par Ciba Gelgy ou RALOX® LC commercialisé par la Société Raschig), les amines bloquées (par exemple NAUGARD® 445 commercialisé par Uniroyal Chemicals) et les mélanges d'un phénol bloqué et d'un thioester (par exemple SANTONOX® commercialisé par Monsanto). De préférence, on utilise un phénol bloqué.

Les compositions selon l'invention peuvent, en outre, contenir les additifs suivants :
- un agent régulateur de la viscosité (0-55 % en poids) choisi parmi:
   - les cires, notamment les cires de polyéthylène (par exemple VESTOWAX® A227 ou A616 commercialisé par Hüls), les cires issues de la synthèse Fisher-Tropsch (par exemple SASOLWAX® commercialisé par Sasol ou VESTOWAX® SH 105 commercialisé par Hüls), les cires microcristallines (par exemples VESTOWAX® 520 commercialisé par Hüls), les cires de polypropylène, notamment les polypropylènes atactiques, les homopolymères et les copolymères statistiques ou séquencés à fort Indice de fluidité (par exemple VESTOLEN® P commercialisé par Hüls). De préférence, les cires ont un point de fusion compris entre 150 et 165°C et un indice de viscosité (norme ISO 1191) compris entre 150 et 500 cm³/g.
   - les plastifiants tels que le polyisobutène de poids moléculaire compris entre 500 et 2000 (par exemple INDOPOL® commercialisé par Amoco ou NAPVIS® commercialisé par BP) et les phtalates.
- une charge (0-60 % en poids) telle que le carbonate de calcium, le sulfate de baryum, éventuellement en présence d'un agent de blanchiment tel qu'un oxyde de titane ou de zinc.
- un copolymère (0-50 % en poids) choisi parmi les copolymères de l'éthylène et de l'acétate de vinyle et les copolymères bloc styrène/butadiène/styrène, styrène/isoprène/styrène ou styrène/butène/éthylène/styrène. De préférence, on utilise un copolymère de l'éthylène et de l'acétate de vinyle.

La préparation des colles thermofusibles utilisées dans l'invention peut être réalisée selon les techniques connues de l'homme du métier, par exemple dans un mélangeur agité et chauffé tel qu'un appareil sphérique du type Turbosphère® commercialisé par la société Moritz, un mélangeur du type pale en Z ou une extrudeuse en continu.

Les colles thermofusibles ainsi obtenues peuvent se présenter sous la forme de granulés, billes, pastilles ou blocs.

Ces colles thermofusibles sont particulièrement avantageuses dans le domaine du collage du bois.

Dans une première variante, préférée, les colles sont utilisées pour coller des chants sur des panneaux de nature variée.

Pour mettre en oeuvre ce collage, on place la colle dans un fondoir à une température de l'ordre de 200°C relié au cylindre enducteur d'une machine de placage de chants. La colle monte le long du cylindre vertical. Au contact du cylindre, le côté du panneau est enduit de colle chaude et on y applique le chant qui est maintenu par pression pendant un court Instant de l'ordre de la seconde, voire moins. A la sortie de la machine, le chant est découpé à la longueur du panneau.

Le collage est mis en oeuvre en continu avec une vitesse de défilement des panneaux sur la machine pouvant atteindre 150 mètres par minute voire davantage.

Les panneaux sont généralement choisis parmi les panneaux de particules de bois, les panneaux MDF (en anglais "Médium Density Fiberboard") et les panneaux de bois reconstitué.

Les chants sont généralement choisis parmi les chants en copolymère acrylonltrile/butadiène/styrène (ABS), en polychlorure de vinyle (PVC), en stratifié bois ou mélaminé. L'épaisseur des chants peut varier dans une large mesure, par exemple de 0,1 à 5 mm.

Dans une deuxième variante, les colles sont utilisées pour coller des supports décoratifs souples sur des profilés ou des supports plans de grande surface et à bords courbes (technique dite du "soft-forming").

Le collage est mis en oeuvre sur une machine de placage de chants modifiée en ce que le support est plaqué sur le profilé au moyen de rouleaux positionneurs.

Les profilés sont généralement des panneaux de particules de bols, en bois ou en MDF.

Les supports décoratifs sont généralement de même nature que les chants cités ci-avant, leur épaisseur étant cependant plus faible, de l'ordre de 0,05 à 1 mm,

Ces colles peuvent être aussi utilisées dans l'industrie de la reliure, notamment pour la fabrication de livres, revues, catalogues et annuaires.

Le collage est le plus souvent mis en oeuvre sur une machine à carrousel fonctionnant en continu. Les pages à relier sont placées entre des pinces, la tranche est "grecquée" au moyen d'une fraise afin de créer des indentations et permettre la pénétration de la colle entre les pages. Après un brossage, les pages arrivent successivement au contact de deux cylindres d'enduction qui tournent dans le sens du passage des feuilles et d'un troisième cylindre qui tourne dans le sens opposé audit passage et élimine l'excédent de colle. La couverture de l'ouvrage est déposée sur un plateau mobile, mise en contact avec la tranche encollée et formée sous pression. L'ouvrage est dégagé de la pince et ses bords sont découpés en ligne à l'aide de massicots et de scies.

Le procédé permet de fabriquer de l'ordre de 3000 à 12000 ouvrages à l'heure. Le temps qui s'écoule entre te collage et le massicotage est le plus souvent Inférieur à une minute.

Ces colles peuvent aussi être utilisées dans le domaine de l'emballage, par exemple pour fabriquer des caisses et des étuis en carton, pour former des sacs et des étuis souples ou étiqueter des conserves.

La nature des supports pouvant être collés est très variée.

A titre d'illustration, on peut citer les papiers et les cartons non traités, oléophobes ou hydrophobes, les plastiques et les métaux.

Le collage est généralement mis en oeuvre en continu dans des machines connues de l'homme du métier, lesquelles machines comportent principalement un bac de fusion de la colle, un dispositif d'encollage et un dispositif de mise en contact des parties à coller.

Le dispositif d'encollage peut notamment comporter un cylindre enducteur, un disque enducteur, une buse d'enduction, de pulvérisation ou de fibérisation, ou une buse à lèvre.

Dans tous les cas, la cadence des machines est élevée, de l'ordre de 1000 à 15000 articles par heure.

Les exemples qui suivent permettent d'illustrer l'invention.

### EXEMPLES 1 à 5

### Préparation de colles thermofusibles

Dans un mélangeur chauffé à 190°C, on introduit les composés suivants :
***A*** - VESTOPLAST® 408 (copolymère éthylène/propène/buténe riche en butène ; viscosité à 190°C (DIN 53019) : 8000 mPa.s ; point de fusion Bille et Anneau (DIN 52011): 107°C; commercialisé par Hüls).
***B*** - VESTOPLAST® 750 (copolymère éthylène/propène/butène riche en propène ; viscosité à 190°C (DIN 53019) : 50000 mPa.s ; point de fusion Bille et Anneau (DIN 52011): 107°C ; commercialisé par Hüls).
***C -*** LOTRYL® 30 BA 02 (copolymère éthylène/acrylate de n-butyle ; teneur en acrylate de n-butyle : 30 % ; indice de fluidité : 2 g/10 min (ASTM D 1238) ; commercialisé par ELF ATOCHEM S.A.).
***D -*** ESCOREZ® 5380 (résine cyclique hydrogénée ; point de fusion Bille et Anneau : de l'ordre de 85°C ; commercialisée par Exxon).
***E -*** VESTOLEN® P 2000 (cire de polypropylène ; point de fusion (DIN 53 736 B2) : 165°C ; indice de fluidité (ISO 1133, conditions 18 = 70 g/min ; commercialisée par Hüls).
***F*** - Oxyde de titane RL 68 (oxyde de type rutile commercialisé par la Société THANN et MULHOUSE - France).
***G*** - RALOX® LC (antioxydant du type phénol bloqué commercialisé par la Société RASCHIG).

Les quantités des composés précités exprimées en partie en poids ainsi que la viscosité Brookfield à 200°C (norme ASTM D3236) et le point de fusion Bille et Anneau (DIN 52011) sont présentés dans le tableau 1 suivant :

**TABLEAU 1**

| **COMPOSE** | **EXEMPLE** | | | | |
|---|---|---|---|---|---|
| | 1 | 2 | 3 | 4 (comparatif) | 5 (comparatif) |
| A | 42,5 | 35 | 25 | 50 | 15 |
| B | 42,5 | 35 | 25 | 50 | 15 |
| C | 15 | 30 | 50 | 0 | 70 |
| D | 30 | 30 | 30 | 30 | 30 |
| E | 8 | 8 | 8 | 8 | 8 |
| F | 2 | 2 | 2 | 2 | 2 |
| G | 0,1 | 0,1 | 0,1 | 0,1 | 0,1 |
| Viscosité (mPa.s) | 29600 | 39000 | 138000 | 16100 | 600000 |
| Point de fusion (°C) | 157 | 158 | 157 | 156 | 159 |

### EXEMPLES 6 à 10

### Application au collage de chants

Les colles selon les exemples 1 à 5 sont utilisées dans une machine pour le placage de chants sur un panneau de particules de bois de 40 cm de long et 19 mm d'épaisseur. La colle est déposée à 200°C, à raison de 130-160 g/m², à la vitesse de 20 m/minute sur laquelle on applique un chant en ABS (épaisseur : 3 mm ; ABS Raukantex commercialisé par la Société REHAU-Allemagne), en PVC (épaisseur : 3 mm ; PVC Raukantex commercialisé par la Société REHAU-Allemagne) ou en stratifié mélamine (épaisseur : 0,9 mm ; commercialisé par la Société DUROPAL).

A l'issue du collage, l'excédent de la largeur du chant est fraisé et le panneau est découpé aux dimensions suivantes : longueur : 360 mm ; largeur : 35 mm ; épaisseur : 19 mm. Chaque pièce ainsi découpée comporte un chant collé de 360 x 19 mm.

Pour l'évaluation des performances des colles des exemples 1 à 5, on a utilisé les méthodes suivantes :

### a - Comportement à la fusion

La vitesse de fonte de la colle, qui doit être élevée pour des machines fonctionnant à haute cadence, est mesurée en plaçant un becher métallique contenant 300 g de colle dans un bloc d'aluminium creusé aux dimensions du bécher, le bloc étant chauffé à 200°C. Le comportement à la fusion est noté comme suit :

| | | |
|---|---|---|
| 1 | Très bon = | vitesse de fonte très élevée (< 3 minutes) |
| 2 | Bon = | vitesse de fonte élevée (3 à 5 minutes) |
| 3 | Satisfaisant = | vitesse de fonte suffisante (5 à 7 minutes) |
| 4 | Médiocre = | peut poser des problèmes sur machine (7 à 10 minutes) |
| 5 | Déficient = | vitesse de fonte insuffisante pour suivre la cadence de la machine (> 10 minutes) |

### b - Filant de la colle

L'évaluation du filant de la colle est réalisée en observant la formation de fils sur le cylindre enducteur de la machine et leur transfert sur le panneau de particules lors du collage du chant.

Le filant est noté comme suit:

| | | |
|---|---|---|
| 1 | Très bon = | pas de fils |
| 2 | Bon = | très peu de fils minces |
| 3 | Satisfaisant = | peu de fils minces |
| 4 | Médiocre = | présence de fils épais |
| 5 | Déficient = | nombreux fils épais, souillures des rouleaux de la plaqueuse. |

### c - Temps ouvert

Sur un panneau encollé au moyen de la machine de placage décrite ci-avant (température de la colle : 200°C ; dépôt : 130-160 m²/g), on applique manuellement un chant toutes les 5 secondes. Le temps ouvert, exprimé en secondes, est le temps à partir duquel le chant ne colle plus sur le panneau.

### d - Montée en cohésion

La montée en cohésion est déterminée par un pelage manuel du chant à la sortie de la machine.

| | | |
|---|---|---|
| 1 | Très bon | > 5 N/mm |
| 2 | Bon | 4 à 5 N/mm |
| 3 | Satisfaisant | 2 à 4 N/mm |
| 4 | Médiocre | 1 à 2 N/mm |
| 5 | Déficient | < 1 N/mm |

### e - Tenue au pelage

On opère un pelage de la pièce encollée à 90°C avec une vitesse de traction égale à 100 mm/minute.

Les résultats sont exprimés en N/mm. Une tenue au pelage inférieure à 2 N/mm est considérée comme insuffisante.

### f- Evaluation du mouillage (adhésion)

La détermination de la nature de l'adhésion de la colle sur le panneau est effectuée par pelage de la pièce collée après 24 heures de collage. Une rupture du type cohésif est recherchée.

L'adhésion est définie comme suit :

| | | |
|---|---|---|
| 1 | Très bonne = | plus de 75 % d'arrachement dans le panneau |
| 2 | Bonne = | de 50 à 75 % d'arrachement dans le panneau |
| 3 | Satisfaisante = | de 25 à 50 % d'arrachement dans le panneau |
| 4 | Médiocre = | moins de 25 % d'arrachement dans le panneau |
| 5 | Déficiente = | pas d'arrachement dans le panneau |

### g - Tenue en température

La pièce encollée est placée dans une étuve à 50°C pendant une heure. Toutes les heures, on augmente la température de 10°C jusqu'à 130°C au maximum. La tenue en température est la température à laquelle on observe le décollement du chant.

Les résultats des performances des colles des exemples 1 à 5 sont présentés dans le tableau 2 (exemples 6 à 10 respectivement).

**TABLEAU 2**

| **EXEMPLE** | | **6** | **7** | **8** | **9 (comparatif)** | **10 (comparatif)** |
|---|---|---|---|---|---|---|
| ***a*** | Fusion | 1 | 1 | 3 | 1 | 5 |
| ***b*** | Filant | 3 | 1 | 1 | 5 | 1 |
| ***c*** | Temps ouvert (s) | 10-20 | 10-20 | < 10 | > 30 | < 10 |
| ***d*** | Cohésion | 2 | 1 | 3 | 5 | 3 |
| ***e*** | Pelage (N/mm) | | | | | |
| • chant ABS | | 6,2 | 6,6 | 4,7 | 4,2 | 4,2 |
| • chant PVC | | 7,0 | 7,7 | 4,9 | 4,4 | 4,4 |
| ***f*** | Adhésion | 2 | 2 | 3 | 2 | 5 |
| ***g*** | | | | | | |
| • chant ABS | Tenue en température (°C) | 120 | 120 | 120 | 110 | 120 |
| • chant PVC | | 120 | 120 | 110 | 120 | 110 |
| • chant mélaminé | | 120 | 120 | 100 | 100 | 90 |

## Revendications

1. Utilisation d'une colle thermofusible qui comprend :
a) 30 à 90 % en poids (A) d'au moins une polyalphaoléfine essentiellement amorphe et (B) d'au moins un copolymère éthylène/(méth)acrylate d'alkyle, le rapport pondéral (B)/(A)+(B) étant compris entre 0,05 et 0,55
b) 10 à 70 % en poids d'une résine tackifiante ;
c) 0,1 à 3 parties en poids d'un antioxydant pour 100 parties en poids des composés sous a) et b)
pour le collage du bois, notamment pour le placage de chants ou de supports décoratifs, pour la reliure d'ouvrages, notamment des livres, revues, catalogues et annualres, pour la fabrication d'emballages, notamment de caisses, étuis et sacs pour le collage d'étiquettes.

2. Utilisation selon la revendication 1 dans laquelle le rapport B/A + B est compris entre 0,10 et 0,40.

3. Utilisation selon l'une des revendications 1 ou 2 dans laquelle la polyalphaoléfine est un copolymère de l'éthylène et/ou du propène et/ou du butène-1 et/ou de l'hexène, ou un mélange de ces copolymères.

4. Utilisation selon l'une des revendications 1 à 3 dans laquelle le radical alkyle du copolymère èthylène/(méth)acrylate d'alkyle renferme 1 à 8 atomes de carbone.

5. Utilisation selon la revendication 4 dans laquelle le radical alkyle du copolymère éthylène/(méth)acrylate d'alkyle est le méthyle, le butyle et l'octyle.

## Patentansprüche

1. Verwendung eines Schmelzklebstoffes, der enthält:
a) 30 bis 90 Gew.-% (A) mindestens eines im wesentlichen amorphen Polyalphaolefins und (B) mindestens eines Ethylen/Alkyl(meth)acrylat-Copolymeren, wobei das Gewichtsverhältnis (B)/(A)+(B) zwischen 0,05 und 0,55 liegt
b) 10 bis 70 Gew.-% eines klebrigmachenden Harzes
c) 0,1 bis 3 Gew.-Teile eines Antioxidanten auf 100 Gew.-Teile der Verbindungen unter a) und b)
für die Verleimung von Holz, insbesondere für die Furnierung von Kanten oder von dekorativen Trägern, für das Einbinden von Schriften, insbesondere von Büchern, Zeitschriften, Katalogen und Kalendern, für die Herstellung von Verpackungen, insbesondere von Kisten, Etuis und Beuteln, für das Aufkleben von Etiketten.

2. Verwendung nach Anspruch 1, in der das Verhältnis (B)/(A)+(B) zwischen 0,10 und 0,40 liegt.

3. Verwendung nach Anspruch 1 oder 2, in der das Polyalphaolefin ein Ethylen- und/oder ein Propen- und/oder ein Buten-1- und/oder ein Hexencopolymeres oder ein Gemisch dieser Copolymeren ist.

4. Verwendung nach einem der Ansprüche 1 bis 3, in der der Alkylrest des Ethylen/ Alkyl(meth)acrylat-Copolymeren 1 bis 8 Kohlenstoffatome enthält.

5. Verwendung nach Anspruch 4, in der der Alkylrest des Ethylen/Alkyl(meth)-acrylat-Copolymeren Methyl, Butyl und Octyl ist.

## Claims

1. Use of a hot-melt adhesive which includes:
a) 30 to 90 % by weight (A) of at least one essentially amorphous poly-alpha-olefin and (B) of at least one ethylene/alkyl (meth)acrylate copolymer, the weight ratio (B)/(A)+(B) being between 0.05 and 0.55;
b) 10 to 70 % by weight of a tackifying resin;
c) 0.1 to 3 parts by weight of an antioxidant per 100 parts by weight of the compounds under a) and b).
for the adhesive bonding of wood, especially for the lamination of edges or of decorative supports, for bookbinding, especially of books, journals, catalogues and directories, for the manufacture of packagings, especially of boxes, cases and bags, or for bonding labels.

2. Use according to Claim 1, in which the ratio B/A + B is between 0.10 and 0.40.

3. Use according to either of Claims 1 and 2, in which the poly-alpha-olefin is a copolymer of ethylene and/or of propene and/or of 1-butene and/or of hexene, or a mixture of these copolymers.

4. Use according to one of Claims 1 to 3, in which the alkyl radical of the ethylene/alkyl (meth)acrylate copolymer contains 1 to 8 carbon atoms.

5. Use according to Claim 4, in which the alkyl radical of the ethylene/alkyl (meth)acrylate copolymer is methyl, butyl and octyl.
